# EUROPEAN PATENT APPLICATION

(11) **EP 4 663 586 A1**
(43) Date of publication of application: **17.12.2025**
(21) Application number: 24753352.4
(22) Date of filing: 06.02.2024
(51) Int. Cl.: B65G 61/00, G06Q 10/08, G06Q 10/087

(54) **MANAGEMENT DEVICE AND MANAGEMENT SYSTEM**

(30) Priority: 08.02.2023 JP 2023017724; 23.03.2023 JP 2023046721
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/003914
(87) International publication number: WO 2024/166909

(57) **Abstract**

A management device according to an embodiment includes a setting unit and a management unit. The setting unit sets addresses for products of a plurality of clients. The management unit manages the products in a plurality of warehouses by the addresses.

## Description

### Field

An embodiment of the present disclosure relates to a management device and a management system.

### Background

Conventionally, a product management device for storing products in a warehouse and shipping the products from the warehouse based on delivery information is known (e.g., Patent Literature 1).

### Citation List

### Patent Literature

Patent Literature 1: JP 2022-180082 A

### Summary

### Technical Problem

However, in a warehouse, there may be an empty space where no product is stored. In other words, there is room for improvement in use efficiency of a warehouse.

The present invention has been made in view of the above, and aims to improve use efficiency of a warehouse.

### Solution to Problem

A management device according to one aspect of an embodiment includes a setting unit and a management unit. The setting unit sets addresses for products of a plurality of clients. The management unit manages the products in a plurality of warehouses by the addresses.

Furthermore, a management device according to an aspect of an embodiment includes a management unit. The management unit manages products of a plurality of clients stored in a warehouse for each of the clients. When a product of a first client based on shipping information is out of stock and a product identical to the product of the first client that is out of stock is stored as a product of a second client different from the first client, the management unit ships the product of the second client as a substitute product.

### Advantageous Effects of Invention

According to one aspect of an embodiment, use efficiency of a warehouse can be improved.

### Brief Description of Drawings

FIG. 1 is a side view schematically illustrating a storage state of products in a warehouse.
FIG. 2 is a plan view schematically illustrating the storage state of products in the warehouse.
FIG. 3 is a diagram illustrating an outline of a management system according to an embodiment.
FIG. 4 is a schematic block diagram illustrating a warehouse management device according to the embodiment.
FIG. 5 is a schematic block diagram illustrating a management device according to the embodiment.
FIG. 6 is a diagram illustrating an example of an address set for a product.
FIG. 7 is a flowchart illustrating an address setting process according to the embodiment.
FIG. 8 is a diagram schematically illustrating an example of a computer hardware configuration functioning as a management device or a warehouse management device.
FIG. 9 is a schematic block diagram illustrating a warehouse management device 2 according to a second embodiment.
FIG. 10 is a flowchart illustrating a product picking process according to the second embodiment.

### Description of Embodiments

Hereinafter, the present invention will be described through embodiments. However, the following embodiments do not limit the scope of the invention being indicated by appended claims. Still more, not all combinations of features described in the embodiments are essential to the solution of the invention.

### (First embodiment)

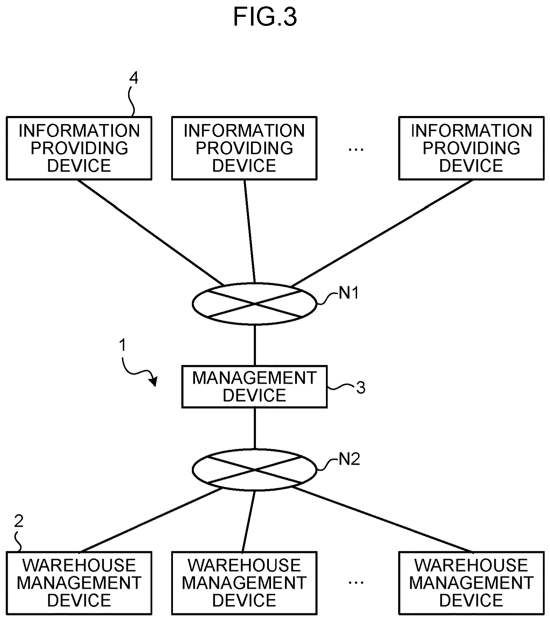

A management system 1 (see FIG. 3) according to a first embodiment is a system that manages packages in a plurality of warehouses WH. The plurality of warehouses WH are provided in different regions. The warehouses WH store a large number of products by product type. For example, products are managed in stock keeping units (SKUs) in the warehouses WH. Products with same design and different sizes are managed as different SKUs for each size. For example, when there are three sizes (e.g., S, M, and L) with the same design, they are managed as three SKUs. In the warehouse WH, many products are managed by SKU.

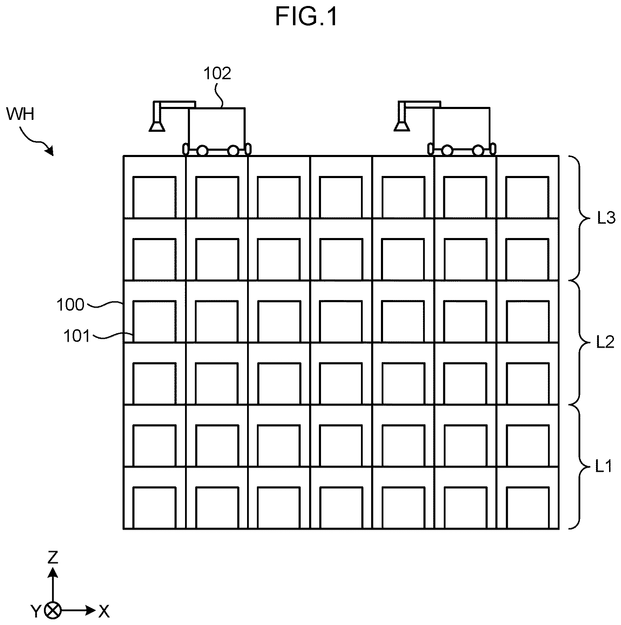

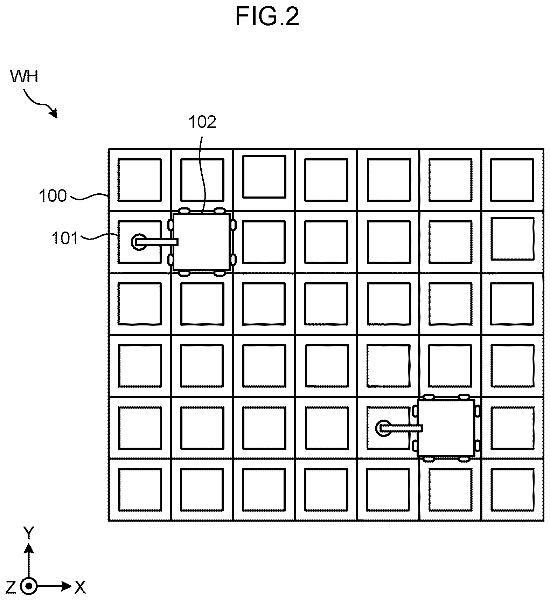

In the warehouse WH, for example, as illustrated in FIGS. 1 and 2, products are stored on shelves 100 that can store products arranged in a front-rear direction (X-axis direction), a left-right direction (Y-axis direction), and an up-down direction (Z-axis direction). FIG. 1 is a side view schematically illustrating a storage state of products in the warehouse WH. FIG. 2 is a plan view schematically illustrating the storage state of products in the warehouse WH. Products are placed in a basket 101 and stored on each of the shelves 100.

In the warehouse WH, a picking robot 102 travels above the shelves 100 in the left-right direction and the front-rear direction to take out the basket 101 containing products from the shelf 100. Based on shipping information, the picking robot 102 lifts and takes out the basket 101 containing a product in the shipping information from an upper part of the shelf 100. The basket 101 lifted by the picking robot 102 is carried to a delivery unit. In the delivery unit, the product is taken out from the basket 101, and shipped.

In the warehouse WH, products are stored at a plurality of management levels according to a shipping frequency. For example, products are classified and stored as "L1", "L2", and "L3" according to their shipping frequency.

"L1" products are long tail products having low sales frequency. "L2" products have a higher sales frequency than the "L1" products. "L3" products have a higher sales frequency than the "L2" products. Products having high sales frequency are sold frequently.

The "L1" products have extremely many types, and their types are more than that of "L2" and "L3" products. The "L2" products have more types than that of "L3" products. The "L3" products have the small number of types. Note that the management level at which the products are classified may be two or four or more.

For example, a product having a high sales frequency is frequently taken out by the picking robot 102, and thus is stored in the shelf 100 at the top. For example, in the warehouse WH, "L3", "L2", and "L1" are stored separately in this order from the top.

A method of storing products in the warehouse WH is not limited to the above method. For example, in the warehouse WH, a plurality of shelves storing a plurality of products may be arranged with a passage interposed therebetween. In this case, the picking robot takes out products from the shelves while traveling on the passage.

Since the "L1" or "L2" products have a low sales frequency and many types, a large warehouse WH is needed in order to store all "L1" and "L2" products in the warehouse WH. However, in practice, there is an empty space where no product is stored in the warehouse WH.

Still more, when each company that sells products stocks up the "L1" and "L2" products in the warehouse WH of each company, it is necessary to have a large warehouse WH or a large number of warehouses WH.

Therefore, a load for storing the "L1" and "L2" products increases.

In view of this point, the management system 1 according to the first embodiment manages some of the products regardless of in-house products or products of another company. In other words, the management system 1 according to the first embodiment collectively manages products of a plurality of companies. Hereinafter, another company may be described as a client.

The warehouse WH stores products of the client in addition to in-house products. For example, the warehouse WH stores in-house "L1", "L2", and "L3" products. Further, the warehouse WH stores "L1" and "L2" products of the client (another company).

For example, the company has the management system 1, and the client (another company) does not have the management system 1. In other words, products of the client (another company) are managed by the management system 1 of one company (their own company). Note that their own company may be a company that only has a warehouse management device 2 and a management device 3 (warehouse WH) described below. In this case, their own company having the management system 1 stores products of the client (another company) in the warehouse WH, and ships the products of the client.

As a result, the management system 1 can reduce an empty space in the warehouse WH, and can improve the use efficiency of the warehouse WH. Furthermore, the management system 1 can reduce unnecessary warehouses WH, and can reduce a load of managing the warehouses WH.

The management system 1 according to the first embodiment will be described with reference to FIG. 3. FIG. 3 is a diagram schematically illustrating the management system 1 according to the first embodiment. The management system 1 includes the warehouse management device 2 and the management device 3.

The management device 3 is connected to an information providing device 4 via a network N1 so as to be able to communicate with each other in a wireless or wired manner. The network N1 is, for example, a local area network (LAN) or a wide area network (WAN) such as the Internet, and includes one or more networks.

The management device 3 and the warehouse management device 2 are connected via a network N2 so as to be able to communicate with each other in a wireless or wired manner.

The information providing device 4 is an information providing device of the client. The information providing device 4 is, for example, a server device of the client. The client is a company that sells products. The client includes, for example, a company that sells products via the Internet. In other words, the client includes a company that sells products through e-commerce. The client includes a plurality of different clients. In other words, the information providing device 4 is an information providing device owned by each of the plurality of clients.

The information providing device 4 manages products of the client. The information providing device 4 transmits client product information to the management device 3. The client product information transmitted to the management device 3 (hereinafter referred to as "client product information") includes information on products owned by the client. For example, the client product information includes information regarding a total product inventory quantity needed by the client. The client product information is information regarding products whose management levels are equal to or lower than a predetermined level. The predetermined level is a level related to products with a low shipping frequency. The product at the predetermined level is, for example, the "L2" product or lower.

The information providing device 4 transmits shipping information on products of the client (hereinafter referred to as "client shipping information") to the management device 3. The client shipping information is shipping information regarding products whose management levels are equal to or lower than the predetermined level.

Note that the information providing device 4 includes an information providing device of their own company. The information providing device 4 includes, for example, a server device of their own company. The information providing device 4 of their own company transmits in-house product information to the management device 3. The in-house product information includes product inventory information needed by their own company. The in-house product information is information on products at all management levels. The information providing device 4 of their own company transmits shipping information on in-house products to the management device 3. The shipping information on in-house products is information on products at all management levels. The information providing device 4 of their own company may be included in the management system 1.

The warehouse management device 2 manages products in the warehouse WH. The warehouse management device 2 manages shipment of products in the warehouse WH. The warehouse management device 2 causes the warehouse WH to ship products based on the shipping information transmitted from the management device 3. For example, the warehouse management device 2 is provided in each warehouse WH.

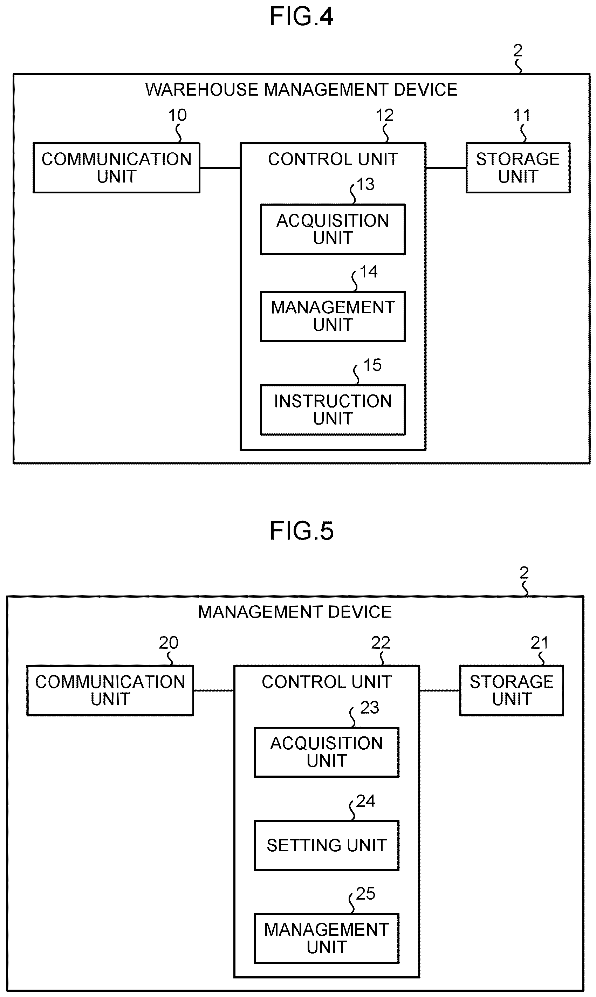

The warehouse management device 2 will be described with reference to FIG. 4. FIG. 4 is a schematic block diagram illustrating the warehouse management device 2 according to the first embodiment. The warehouse management device 2 includes a communication unit 10, a storage unit 11, and a control unit 12.

The communication unit 10 is realized by, for example, a network interface card (NIC). Furthermore, the communication unit 10 is connected to the network N2 (see FIG. 1) in a wired or wireless manner. The communication unit 10 is communicably connected to the management device 3. Furthermore, the communication unit 10 is wirelessly connected to each of the picking robots 102 (See FIGS. 1 and 2).

The storage unit 11 is realized by, for example, a semiconductor memory element such as a random access memory (RAM) or a flash memory, or a storage device such as a hard disk or an optical disk. The storage unit 11 stores various programs and the like executed by the control unit 12.

The control unit 12 includes an acquisition unit 13, a management unit 14, and an instruction unit 15. The acquisition unit 13, the management unit 14, and the instruction unit 15 are not limited thereto, and may be integrated or divided.

The acquisition unit 13 acquires product management information and the shipping information from the management device 3 via the communication unit 10. The product management information is information on products stored in the warehouse WH. The product management information includes, for example, information on products and quantity. Note that the product management information on the "L1" and "L2" products whose management levels are equal to or lower than the predetermined level includes information regarding companies (client and their own company) possessing (selling) products.

The shipping information includes information on products and shipping destinations (purchasers). The shipping information of the "L1" and "L2" products whose management levels are equal to or lower than the predetermined level includes information regarding companies (client and their own company) that ship the products. Note that products corresponding to the product management information are carried in and stored in the warehouse WH.

The management unit 14 manages products stored in the warehouse WH based on the product management information and shipping information acquired. The management unit 14 manages a product inventory state of the warehouse WH and storage positions of baskets 101 housing products based on the product management information and the shipping information acquired.

For the "L1" and "L2" products whose management levels are equal to or lower than the predetermined, the management unit 14 manages products separately for each of the clients and their own company. For example, when there are the same products possessed by different clients, the products are stored in the basket 101 for each client. Note that the same products possessed by different clients may be stored in one basket 101, and a quantity of products possessed by each client may be managed.

The instruction unit 15 generates motion information for the picking robot 102 to take out the product from the shelf 100 based on the shipping information acquired. The motion information generated is transmitted to the picking robot 102. As a result, the picking robot 102 takes out the basket 101 containing the products from the shelf 100 based on the shipping information.

Next, the management device 3 will be described with reference to FIG. 5. FIG. 5 is a schematic block diagram illustrating the management device 3 according to the embodiment. The management device 3 includes a communication unit 20, a storage unit 21, and a control unit 22.

The communication unit 20 is realized by, for example, an NIC. Furthermore, the communication unit 20 is connected to the networks N1 and N2 (see FIG. 1) in a wired or wireless manner. The communication unit 20 is communicably connected to the information providing device 4. The communication unit 20 is communicably connected to the warehouse management device 2.

The storage unit 21 is realized by, for example, a semiconductor memory element such as a RAM or a flash memory, or a storage device such as a hard disk or an optical disk. The storage unit 21 stores various programs and the like executed by the control unit 22.

The control unit 22 includes an acquisition unit 23, a setting unit 24, and a management unit 25. The acquisition unit 23, the setting unit 24, and the management unit 25 are not limited thereto, and may be integrated or divided.

The acquisition unit 23 acquires the product information from the information providing device 4 via the communication unit 20. The acquisition unit 23 acquires the client product information from the information providing device 4 of the client. The acquisition unit 23 acquires the in-house product information from the information providing device 4 of their own company.

The acquisition unit 23 acquires the shipping information from the information providing device 4 via the communication unit 20. The acquisition unit 23 acquires the client shipping information from the information providing device 4 of the client. The acquisition unit 23 acquires in-house shipping information from the information providing device 4 of their own company.

The setting unit 24 sets the product management information. Specifically, the setting unit 24 sets the warehouse WH storing products and the quantity of products managed in the warehouse WH with respect to the product information. The setting unit 24 sets the warehouse WH storing products based on a product demand forecast. The setting unit 24 sets the warehouse WH storing products based on a regional product demand forecast.

Still more, the setting unit 24 sets the product quantity to be managed in the warehouse WH based on the product demand forecast. The setting unit 24 sets the product quantity to be managed in the warehouse WH based on the regional product demand forecast.

The demand forecast is created based on, for example, product purchase results and purchaser address information. The demand forecast is acquired from, for example, the information providing device 4 of their own company. Further, the demand forecast may be acquired from the information providing device 4 of the client. The demand forecast may be created by the management device 3 based on information acquired from the information providing device 4 of their own company and the information providing device 4 of the client. The demand forecast is created using, for example, a demand forecast model.

The demand forecast is generated, for example, as a heat map. The heat map is a map in which regions on the map are classified by color according to a demand level. For example, a region predicted to have high demand is indicated by "red", and a region predicted to have low demand is indicated by "blue".

For example, when a demand for a product is high in a cold region, the setting unit 24 sets a quantity of the product managed in the warehouse WH provided in a cold region or a place close to the cold region larger than a quantity of the product managed in the warehouse WH provided in other regions.

As a result, for example, the product that is frequently purchased in the cold region is shipped from the warehouse WH close to purchasers. Therefore, time until the product reaches the purchaser is shortened. In addition, the cost for delivering the product, for example, a transportation cost is reduced.

The setting unit 24 sets the warehouse WH storing products and the product quantity managed in the warehouse WH for each product of the client and each product of their own company. Specifically, the setting unit 24 sets the warehouse WH storing products and the product quantity managed in the warehouse WH for the "L1" and "L2" products of the client and all products of their own company.

The setting unit 24 sets an address for each product. The setting unit 24 sets addresses for products of a plurality of clients. The setting unit 24 sets an address for each product of their own company. Specifically, the setting unit 24 sets addresses for products whose management levels are equal to or lower than the predetermined level. The setting unit 24 sets addresses for the "L1" and "L2" products of the client. The setting unit 24 sets addresses for the "L1" and "L2" products of their own company.

The address includes information for identifying the warehouse WH storing the product from the plurality of warehouses WH. In addition, the address includes information for identifying each product in the warehouse WH. The address is set regardless of the warehouse WH storing products. In other words, the address is a unified address for the plurality of warehouses WH.

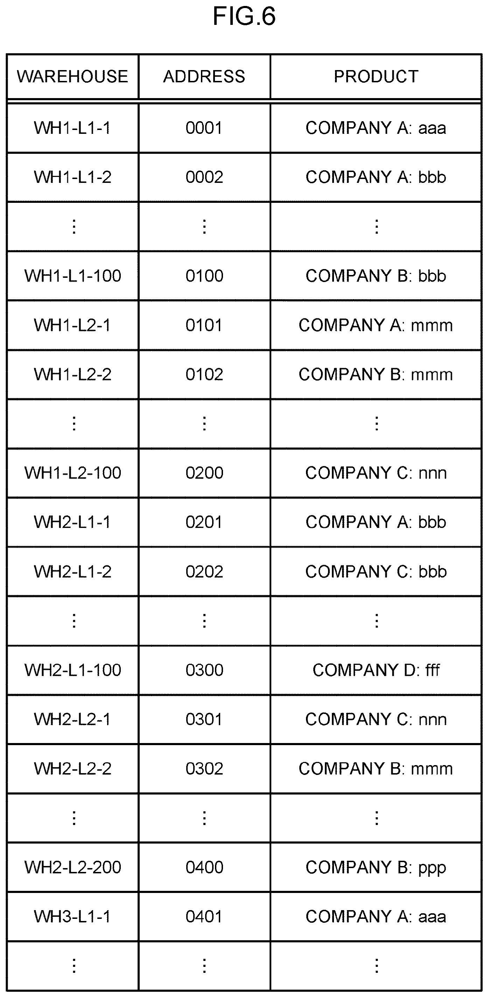

For example, the address is set as illustrated in FIG. 6. FIG. 6 is a diagram illustrating an example of an address set for each product. FIG. 6 illustrates, as an example, addresses of products stored in warehouses "WH1", "WH2", and "WH3". Note that "L1" and "L2" products are managed in 100 SKU in each of the warehouses "WH1", "WH2", and "WH3". In addition, their own company is indicated as "Company A", and the clients are indicated as "Company B", "Company C", and "Company D".

In FIG. 6, management numbers for "L1" in the warehouse "WH1" (e.g., numbers for basket 101) are indicated as "WH1-L1-1" to "WH1-L1-100". Management numbers for "L2" in the warehouse "WH1" (e.g., numbers for basket 101.) are indicated as "WH1-L2-1" to "WH1-L2-100". The same applies to the warehouses "WH2" and "WH3". Note that the management numbers in the warehouse WH are used for the description, and the products are not necessarily managed by the management numbers in each warehouse WH.

Addresses are uniformly set for the management numbers in each warehouse WH. For example, the number of the address increases in order from "0001", and is set at "0002", "0003", and the like. Note that the addresses are indicated by numbers for ease of description, but are not limited thereto. The address may be characters or the like, or may be a combination of numbers, characters, and the like.

For example, unified addresses are set in order from the warehouse "WH1-L1-1". For example, "0001" is set as an address corresponding to the warehouse "WH1-L1-1". An address corresponding to the warehouse "WHL1-2" is set at "0002".

Still more, "0100" is set as an address corresponding to the warehouse "WH1-L1-100". An address corresponding to the warehouse "WH1-L2-1" is set at "0101".

Still more, "0200" is set as an address corresponding to the warehouse "WH1-L2-100". An address corresponding to the warehouse "WH2-L1-1" is set at "0201".

In this manner, places where the "L1" and "L2" products are stored in each warehouse WH are used as one virtual warehouse.

The address is set for products of the client and in-house products according to the warehouse WH to be stored. In other words, the address is set in association with the management number of the warehouse WH where the product is stored and the product.

For example, in the warehouse "WH1", an address of "0001" is set for a product "aaa" of "Company A" stored as "L1-1". An address of "0002" is set for a product "bbb" of Company A stored as "L1-2" in the warehouse "WH1". Still more, an address of "0100" is set for the product "bbb" of Company B stored as "L1-100" in the warehouse "WH1".

Still more, an address of "0102" is set for a product "mmm" of Company B stored as "L2-2" in the warehouse "WH1".

Further, an address of "0201" is set for the product "bbb" of Company A stored as "L1-1" in the warehouse "WH2". Even for the product "bbb" of the same Company A, different addresses are set when warehouses WH to be stored are different.

The management unit 25 uses addresses to manage products in the plurality of warehouses WH. The management unit 25 uses addresses to manage the "L1" and "L2" products whose management levels are equal to or lower than the predetermined level in the plurality of warehouses WH.

The management unit 25 determines the warehouse WH to ship the product based on the shipping information transmitted from the information providing device 4, and transmits the shipping information to the warehouse management device 2 of the warehouse WH from which the product will be shipped.

For example, when the shipping information is transmitted from the information providing device 4 of the client, the management unit 25 detects, based on addresses, the warehouses WH in which the product to be shipped are stored. Then, based on the purchaser address in the shipping information, the management unit 25 selects a warehouse WH suitable for shipping, for example, a warehouse WH closest to the purchaser address among the warehouses WH that store the product, as the warehouse WH to ship the product. Then, the management unit 25 transmits the shipping information of the product to the warehouse management device 2 of the warehouse WH selected.

The management unit 25 transmits the product management information set by the setting unit 24 to the warehouse management device 2. The product is managed in each warehouse WH by transmitting the product management information to each warehouse management device 2.

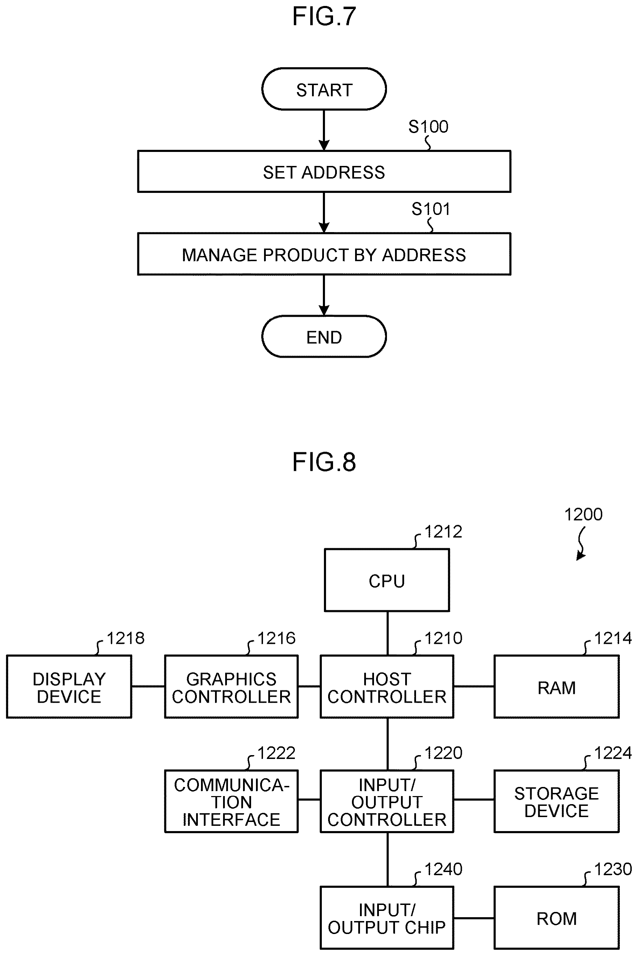

Next, an address setting process according to the first embodiment will be described with reference to a flowchart in FIG. 7. FIG. 7 is the flowchart illustrating the address setting process according to the first embodiment.

The management device 3 sets an address for a product whose management level is equal to or lower than the predetermined level (S100). The management device 3 sets addresses for the "L1" and "L2" products of the client. In addition, the management device 3 sets addresses for the "L1" and "L2" products of their own company.

The management device 3 manages products whose management levels are equal to or lower than the predetermined level according to the addresses set (S101). The management device 3 manages the warehouses WH storing products whose management levels are equal to or lower than the predetermined level by addresses. The management device 3 manages products whose management levels are equal to or lower than the predetermined level by unified addresses for the plurality of clients and their own company.

The management device 3 includes the setting unit 24 and the management unit 25. The setting unit 24 sets addresses for products of a plurality of clients. The management unit 25 uses addresses to manage products in the plurality of warehouses WH.

As a result, when products of the plurality of clients are collectively stored in the warehouse WH, the management device 3 can manage products of each of the clients in a distinguished manner. Therefore, the management device 3 can suppress generation of an empty space in the warehouse WH, and can improve the use efficiency of the warehouse WH. Still more, for example, the client can downsize the warehouse WH storing products or reduce the number of warehouses WH storing products. Therefore, the management device 3 can reduce a product management load. Still more, the management device 3 can manage products of the plurality of clients in a distributed manner in the plurality of warehouses WH. Thus, the management device 3 can manage a large number of products by regarding the plurality of warehouses WH as, for example, one huge warehouse. Therefore, for example, the management device 3 can manage a large number of products by effectively using existing warehouses WH without newly constructing one huge warehouse.

The setting unit 24 sets the warehouse WH storing products and the product quantity managed in the warehouse WH based on the product demand forecast.

As a result, the management device 3 can suppress a product not suitable for storage from being stored in the warehouse WH. Therefore, the management device 3 can improve the use efficiency of the warehouse WH.

The plurality of warehouses WH are provided in different regions. The setting unit 24 sets the warehouse WH storing products and the quantity of products managed in the warehouse based on the regional product demand forecast.

As a result, for example, the product is easily shipped from the warehouse WH close to the product purchaser. Therefore, the management device 3 can shorten the time until the product reaches the purchaser. In addition, the management device 3 can reduce the cost for delivering the product, for example, the transportation cost.

In the warehouse WH, products are stored at a plurality of management levels according to the shipping frequency. The setting unit 24 sets addresses for products whose shipping frequency are equal to or lower than the predetermined level.

As a result, for example, the client can handle the products with low shipping frequency without requiring the warehouse WH for storing products with low shipping frequency.

FIG. 8 is a diagram schematically illustrating an example of a hardware configuration of a computer 1200 functioning as the management device 3 or the warehouse management device 2. A program installed in the computer 1200 can cause the computer 1200 to function as one or more "units" of the device according to the present embodiment, or cause the computer 1200 to execute an operation associated with the device according to the present embodiment or one or more "units" thereof, and/or cause the computer 1200 to execute a process according to the present embodiment or a stage of the process. The above program may be executed by a CPU 1212 to cause the computer 1200 to perform certain operations associated with some or all of blocks in the flowchart and the block diagram described herein.

The computer 1200 according to the present embodiment includes the CPU 1212, a RAM 1214, and a graphics controller 1216 that are interconnected by a host controller 1210. The computer 1200 also includes input/output units such as a communication interface 1222, a storage device 1224, a DVD drive, and an IC card drive, and the input/output units are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes input/output units such as a ROM 1230 and a keyboard, and the input/output units are connected to the input/output controller 1220 via an input/output chip 1240.

The CPU 1212 operates according to a program stored in the ROM 1230 and the RAM 1214, thereby controlling each unit. The graphics controller 1216 obtains image data generated by the CPU 1212 in a frame buffer or the like provided in the RAM 1214 or in the graphics controller 1216 itself, and causes the image data to be displayed on a display device 1218.

The communication interface 1222 communicates with other electronic devices via a network. The storage device 1224 stores the program and data used by the CPU 1212 in the computer 1200. The DVD drive reads the program or data from the DVD-ROM or the like and provides the program or data to the storage device 1224. The IC card drive reads the program and data from the IC card and/or writes the program and data to the IC card.

The ROM 1230 stores therein a boot program and the like executed by the computer 1200 at the time of activation, and/or a program dependent on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from the computer-readable storage medium, installed in the storage device 1224, the RAM 1214, or the ROM 1230, which are also an example of the computer-readable storage medium, and executed by the CPU 1212. Information processing described in these programs is read by the computer 1200 and provides cooperation between the program and various types of hardware resources. The device or method may be configured by implementing operation or processing of information according to the use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the transmission data read to the network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the data processed to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like that are described throughout the present disclosure and specified by an instruction sequence of the program, and write back results to the RAM 1214. In addition, the CPU 1212 may search for information in a file, a database, or the like in the recording medium. For example, when a plurality of entries each having the attribute value of a first attribute associated with an attribute value of a second attribute are stored in the recording medium, the CPU 1212 may search for an entry whose attribute value of the first attribute matches a specified condition from a plurality of entries, read the attribute value of the second attribute stored in the entry, and thereby acquire the attribute value of the second attribute associated with the first attribute satisfying a predetermined condition.

The above-described program or software module may be stored in the computer-readable storage medium on the computer 1200 or in the vicinity of the computer 1200. Furthermore, a recording medium such as a hard disk or a RAM provided in a server system connected to a dedicated communication network or the Internet can be used as the computer-readable storage medium, thereby providing a program to the computer 1200 via the network.

The blocks in the flowchart and the block diagram in the present embodiment may represent stages of a process in which the operation is performed or "unit" of the device that is responsible for performing the operation. A predetermined stage and "unit" may be implemented by a dedicated circuit, a programmable circuit provided with computer-readable instructions stored on the computer-readable storage medium, and/or a processor provided with the computer-readable instructions stored on the computer-readable storage medium. The dedicated circuit may include a digital and/or analog hardware circuit, and may include an integrated circuit (IC) and/or a discrete circuit. The programmable circuit may include a reconfigurable hardware circuit including, for example, logical conjunction, logical disjunction, exclusive OR, NAND, NOR, and other logical operations, flip-flop, register, and memory element, such as a field programmable gate array (FPGA) and a programmable logic array (PLA).

The computer-readable storage medium may include any tangible device capable of storing instructions for execution by a suitable device. As a result, the computer-readable storage medium having instructions stored therein includes a product including instructions that may be executed to create means for performing the operations specified in the flowchart or the block diagram. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer-readable instruction may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), and C++, and conventional procedural programming languages, such as a "C" programming language and similar programming languages.

The computer readable instructions may be provided for a processor of a general purpose computer, special purpose computer, or other programmable data processing apparatus, or programmable circuitry, either locally or over a wide area network (WAN) such as a local area network (LAN) and the Internet, to cause the processor of the general purpose computer, special purpose computer, or other programmable data processing apparatus, or the programmable circuitry to execute the computer readable instructions to generate means for executing the operations specified in the flowchart or block diagram. Examples of the processor include a computer processor, a processing unit, a microprocessor, a digital signal processor, a controller, and a microcontroller.

### (Second embodiment)

Next, a management system 1 according to a second embodiment will be described. Here, points that differ from the first embodiment will be mainly described. The description of the same configuration as that of the first embodiment is omitted. Hereinafter, the client may include their own company and other companies in the description.

When the client is their own company, the client product information is information regarding products at all management levels of their own company. When the client is another company, the client product information is information regarding products whose management levels are equal to or lower than a predetermined level. The predetermined level is a level related to products with a low shipping frequency. The product at the predetermined level is, for example, the "L2" product or lower.

When the client is their own company, the client shipping information is shipping information regarding products at all management levels of their own company. When the client is another company, the client shipping information is information regarding products whose management levels are equal to or lower than the predetermined level.

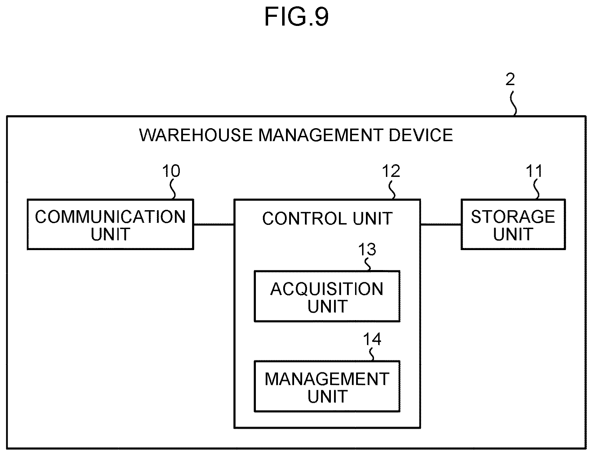

The warehouse management device 2 will be described with reference to FIG. 9. FIG. 9 is a schematic block diagram illustrating a warehouse management device 2 according to the second embodiment. The warehouse management device 2 includes a communication unit 10, a storage unit 11, and a control unit 12. The storage unit 11 stores an inventory state of products in a warehouse WH.

The control unit 12 includes an acquisition unit 13 and a management unit 14. The acquisition unit 13 and the management unit 14 are not limited thereto, and may be integrated or divided.

The acquisition unit 13 acquires product management information and the shipping information from the management device 3 via the communication unit 10. The product management information is information on products stored in the warehouse WH. The product management information includes, for example, information on products and quantity. The product management information includes information on the client possessing (selling) products.

The shipping information includes information on products and shipping destinations (purchasers). The shipping information includes information on the client that ships products.

The management unit 14 manages products of each client for the "L1" and "L2" products whose management levels are the predetermined level or lower.

The management unit 14 manages product inventory quantity of each client. The management unit 14 generates picking information based on the shipping information. The picking information is information for causing a picking robot 102 to take out a product from a shelf 100.

Specifically, the management unit 14 specifies a product to be shipped and a client possessing the product to be shipped based on the shipping information. Hereinafter, the client possessing the product based on the shipping information is referred to as a "specified client", and the product possessed by the specified client based on the shipping information is referred to as a "specified product". The specified client is a company that possesses a product purchased by the purchaser, and the specified product is the product purchased by the purchaser.

The management unit 14 detects the inventory quantity of the specified product. The management unit 14 detects the inventory quantity of the specified product from the inventory state of the product in the warehouse WH stored in the storage unit 11.

The management unit 14 determines whether there is a stock of the specified product. When there is a stock of the specified product, the management unit 14 generates the picking information on the specified product.

When there is no stock of the specified product, i.e., when the specified product possessed by the specified client (first client) is out of stock, the management unit 14 determines whether or not a stock of the same product as the specified product that is out of stock exists in a stock of products of another client (second client) different from the specified client.

Specifically, the management unit 14 detects the inventory quantity of the product of another client for the same product as the specified product that is out of stock from the inventory state of products in the warehouse WH stored in the storage unit 11. Then, the management unit 14 determines whether there is a stock of the same product as the specified product that is out of stock in products of another client.

When there is a stock of the same product as the specified product that is out of stock in products of another client, the management unit 14 generates the picking information in which the product possessed by another client is set as a substitute product for the specified product.

The picking information generated is output to the picking robot 102. As a result, the picking robot 102 takes out the basket 101 containing the product from the shelf 100 based on the picking information.

When there is a stock of the specified product, the management unit 14 ships the specified product. Furthermore, when the specified product is out of stock and the same product as the specified product is in a stock of products of another client, the management unit 14 ships the product of another client as the substitute product.

Note that the product shipped as the substitute product is replenished as the product of another client. For example, when the product of another client is shipped as the substitute product, the management unit 14 updates the product inventory information of another client. The management unit 14 performs a process for replenishing the product of another client based on the inventory information updated. As a result, the product of another client is transported to the warehouse, and the product of another client is replenished.

The management unit 14 manages the specified product as out of stock in the warehouse WH when another client does not have a stock of the specified product that is out of stock. For example, the management unit 14 notifies that there is no stock of the specified product in the warehouse.

Next, the management device 3 (see FIG. 5) will be described. The acquisition unit 23 acquires the product information from the information providing device 4 via the communication unit 20. The acquisition unit 23 acquires the product information of each client from the information providing device 4 of each client.

The acquisition unit 23 acquires the shipping information from the information providing device 4 via the communication unit 20. The acquisition unit 23 acquires the shipping information of each client from the information providing device 4 of each client.

The setting unit 24 sets the product management information. Specifically, the setting unit 24 sets the warehouse WH storing products and the quantity of products managed in the warehouse WH with respect to the product information. The setting unit 24 sets the warehouse WH storing products based on a product demand forecast. The setting unit 24 sets the warehouse WH storing products based on a regional product demand forecast.

Still more, the setting unit 24 sets the product quantity to be managed in the warehouse WH based on the product demand forecast. The setting unit 24 sets the product quantity to be managed in the warehouse WH based on the regional product demand forecast.

The demand forecast is created based on, for example, product purchase results and purchaser address information. The demand forecast is acquired from, for example, the information providing device 4 of their own company. Further, the demand forecast may be acquired from the information providing device 4 of another company. The demand forecast may be created by the management device 3 based on information acquired from the information providing devices 4 of their own company and another company. The demand forecast is created using, for example, a demand forecast model.

Note that the warehouse WH storing products and the product quantity managed in the warehouse WH may be set based on information transmitted from the information providing device 4 of each client.

The setting unit 24 sets the warehouse WH storing products and the product quantity managed in the warehouse WH for each product of the client. For example, the setting unit 24 sets the warehouse WH storing products and the product quantity managed in the warehouse WH for the "L1" and "L2" products of another company and all products of their own company.

The setting unit 24 sets an address for each product. The setting unit 24 sets an address for a product of each client. Specifically, the setting unit 24 sets addresses for products whose management levels are equal to or lower than the predetermined level. The setting unit 24 sets addresses for the "L1" and "L2" products of each client. The setting unit 24 may set addresses for the "L3" products of their own company.

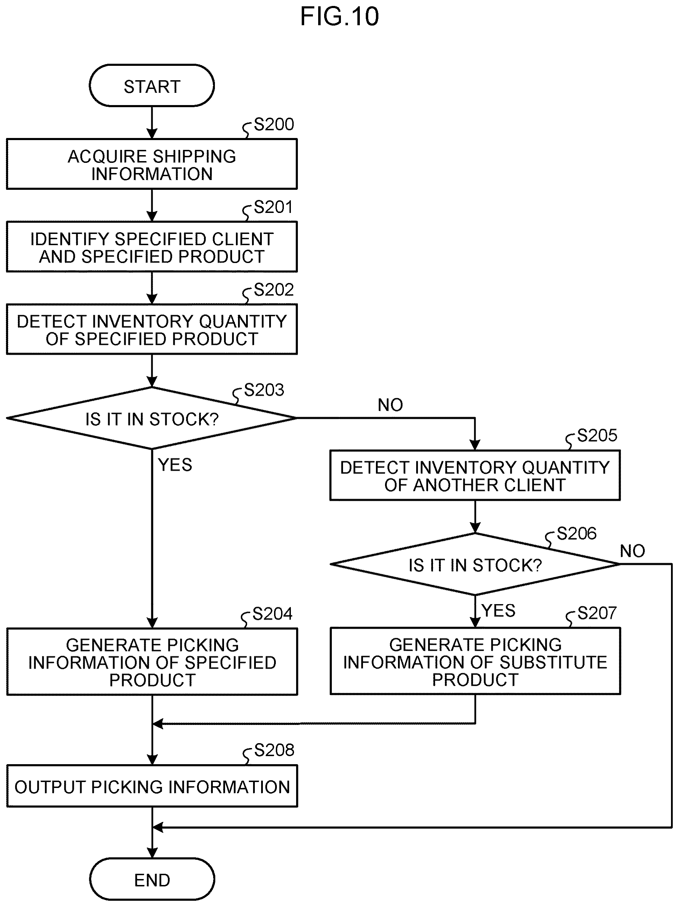

Next, a product picking process according to the second embodiment will be described with reference to a flowchart in FIG. 10. FIG. 10 is a flowchart illustrating a product picking process according to the second embodiment.

The control unit 12 of the warehouse management device 2 acquires the shipping information from the management device 3 (S200). The control unit 12 identifies the specified client and the specified product based on the shipping information (S201).

The control unit 12 detects the inventory quantity of the specified product (S202). The control unit 12 reads the inventory state of products in the warehouse WH stored in the storage unit 11, and detects the inventory quantity of the specified product from the inventory state read. The control unit 12 determines whether there is a stock of the specified product (S203). When the specified product is in stock (S203: Yes), the control unit 12 generates the picking information for the specified product (S204).

When there is no stock of the product of the specified client (S203: No), the control unit 12 detects the inventory quantity of the product of another client for the same product as the specified product (S205). The control unit 12 reads the inventory state of the product in the warehouse WH stored in the storage unit 11, and detects the inventory quantity of the product of another client for the same product as the specified product from the inventory state read. The control unit 12 determines whether or not there is a stock of the same product as the specified product in products of another client (S206).

When there is a stock of the same product as the specified product in products of another client (S206: Yes), the control unit 12 generates the picking information for using the product of another client as the substitute product for the specified product (S207).

When the picking information is generated (S204, S207), the control unit 12 outputs the picking information to the picking robot 102 (S208). As a result, the picking robot 102 takes out the basket 101 containing the product from the shelf 100, and the specified product or the substitute product is shipped.

When there is no stock of the same product as the specified product in products of another client (S206: No), the control unit 12 ends the current process. For example, the control unit 12 notifies that there is no stock of the specified product in the warehouse WH.

The warehouse management device 2 includes the management unit 14. The management unit 14 manages products of a plurality of clients stored in the warehouse WH for each client. When the specified product based on the shipping information is out of stock and the same product as the specified product that is out of stock is stored as a product of another client, the management unit 14 ships the product of another client as the substitute product.

As a result, even when the specified product is out of stock, the warehouse management device 2 can ship the same product as the specified product as the substitute product. Therefore, the warehouse management device 2 can suppress a delay in shipping the product. In other words, the warehouse management device 2 can deliver the product quickly to the purchaser who has purchased the product.

When the substitute product is shipped, the same product as the substitute product is replenished as a product of another client.

As a result, the warehouse management device 2 can suppress the shortage of the product of another client.

In the warehouse WH, products are stored at a plurality of management levels according to the shipping frequency. Products of the plurality of clients stored in the warehouse WH are products whose shipping frequency is equal to or lower than the predetermined level. The management unit 14 ships the substitute product for a product whose shipping frequency is equal to or lower than the predetermined level.

As a result, among the clients, for example, other companies can handle products with low shipping frequency without requiring the warehouse WH for storing products with low shipping frequency. In addition, the warehouse management device 2 can suppress a delay in shipping a product having a low shipping frequency while reducing the inventory quantity of products with low shipping frequency.

Note that, when there is no stock of the specified product in the warehouse WH and there is a stock of the same product as the specified product in products of another client, the warehouse management device 2 ships the product of another client as the substitute product. However, when another client will run out of the stock after shipping the substitute product, the warehouse management device 2 may not ship the product of another client.

Still more, although an example that the warehouse management device 2 determines whether or not to ship the substitute product has been described, the management device 3 may make determination. The management device 3 manages the inventory information in each warehouse WH. The management device 3 may acquire the inventory information in each warehouse WH from each warehouse management device 2. The management device 3 sets the warehouse WH to ship the product based on the shipping information transmitted from the information providing device 4. In addition, the management device 3 determines the presence or absence of the stock of the specified product of the specified client in the warehouse WH to ship the product.

When there is a stock of the specified product, the management device 3 generates information for shipping the specified product. When there is no stock of the specified product and there is a stock of the same product as the specified product in products of another client in the warehouse WH to ship the product, the management device 3 generates information for shipping the product of another client as the substitute product. The management device 3 transmits information generated for shipping the specified product or the substitute product to the warehouse management device 2 of the warehouse WH to ship the product. As a result, the management device 3 ships the specified product or the substitute product from the warehouse WH. The above process is executed, for example, by the control unit 22 (management unit 25) of the management device 3.

Although the present invention has been described using the embodiments, the technical scope of the present invention is not limited to the scope described in the above embodiments. It is obvious to those skilled in the art that various modifications or improvements can be made to the above embodiments. It is obvious from the description of the appended claims that modes to which such changes or improvements are added are embraced in the technical scope of the present invention.

It should be noted that the order of execution of processing such as operations, procedures, steps, and stages in the devices, systems, programs, and methods illustrated in the claims, the specification, and the drawings can be implemented in any order unless "before", "prior to", or the like is specifically stated, or unless an output of a previous process is used in a later process. Even when the operation flow in the claims, the specification, and the drawings is described using "first,", "next,", and the like for convenience, it does not mean that it is essential to perform in this order.

### Reference Signs List

- 1: MANAGEMENT SYSTEM
- 2: WAREHOUSE MANAGEMENT DEVICE
- 3: MANAGEMENT DEVICE
- 4: INFORMATION PROVIDING DEVICE
- 22: CONTROL UNIT
- 24: SETTING UNIT
- 25: MANAGEMENT UNIT
- WH: WAREHOUSE

## Claims

1. A management device comprising:
a setting unit that sets addresses for products of a plurality of clients; and
a management unit that manages the products in a plurality of warehouses by the addresses.

2. The management device according to claim 1, wherein
the setting unit sets a warehouse to store the products and a number of products managed in a warehouse based on a demand forecast of the products.

3. The management device according to claim 1, wherein
the plurality of warehouses are provided in different regions, and
the setting unit sets a warehouse to store the products and a number of products managed in a warehouse based on a regional demand forecast of the products.

4. The management device according to claim 1, wherein
the warehouses store products classified into a plurality of management levels according to a shipping frequency, and
the setting unit sets the addresses for products whose shipping frequency is equal to or lower than a predetermined level.

5. A management system comprising:
the management device according to any one of claims 1 to 4; and
a warehouse management device that manages shipment from the warehouses.

6. A management device comprising
a management unit that manages products of a plurality of clients stored in a warehouse for each of the clients, wherein
when a product of a first client based on shipping information is out of stock and a product identical to the product of the first client that is out of stock is stored as a product of a second client different from the first client, the management unit ships the product of the second client as a substitute product.

7. The management device according to claim 6, wherein when the substitute product is shipped, a product identical to the substitute product is replenished as a product of the second client.

8. The management device according to claim 6, wherein
the warehouse stores products classified into a plurality of management levels according to a shipping frequency,
the products of the plurality of clients stored in the warehouse are products with the shipping frequency equal to or lower than a predetermined level, and
the management unit ships the substitute product for the products with the shipping frequency equal to or lower than the predetermined level.
